# EUROPEAN PATENT APPLICATION

(11) **EP 4 723 403 A1**
(43) Date of publication of application: **08.04.2026**
(21) Application number: 25203394.9
(22) Date of filing: 19.09.2025
(51) Int. Cl.: H02G 1/14, H02G 15/18, H01B 7/282, H01R 4/62, H01R 4/02

(54) **POWER CABLE ASSEMBLY, METHOD FOR JOINTING SHEATHS AND USE OF A SOLDERING MATERIAL**

(30) Priority: 26.09.2024 NO 20240976
(71) Applicant: Nexans, 92400 Courbevoie (FR)
(72) Inventor: Mauri, Massimiliano, 1739 Borgenhaugen (NO); Johanson, Audun, 0661 Oslo (NO)
(74) Representative: Acapo Onsagers AS

(57) **Abstract**

A power cable assembly is proposed, comprising a first power cable end section having a first conductor, a first electrically insulating layer and a first metallic function layer arranged outside the first electrically insulating layer; a second power cable end section having a second conductor, a second electrically insulating layer and a second metallic function layer arranged outside the second electrically insulating layer; a cable joint electrically connecting the first conductor and the second conductor, wherein the cable joint has a joint insulating layer for joining the first electrically insulating layer and the second electrically insulating layer, and a joint metallic function layer for joining the first metallic function layer and the second metallic function layer, wherein the joint metallic function layer is soldered to the first metallic function layer and second metallic function layer under use of a lead-free soldering material or wherein the joint metallic function layer comprises a lead-free soldering material, and wherein the lead-free soldering material comprises at least one of a group of components, the group consisting of indium, tin, aluminium, copper, silver, bismuth, zinc, antimony, lithium and their alloys.

## Description

### Field of the invention

The present invention relates to a power cable assembly, a method for joining a first power cable end section and a second power cable end section of a power cable assembly by preparing a cable joint, and the use of a lead-free soldering material.

### Background

High-voltage cables, especially those used in subsea environments, often need to be connected at various points along their length. This is typically achieved through using joints, in which conductors, insulation layers and other components are connected. To connect metallic elements, they are often soldered or welded. However, soldering is often done by using a soldering material that contains lead, which poses an environmental hazard.

### Summary of the invention

An object of the invention lies in proposing an improved power cable assembly and/or an improved method for joining power cable end sections that does not cause an environmental hazard.

The present invention is defined by the appended claims and in the following:
In a first aspect, the invention relates to a power cable assembly, comprising a first power cable end section having a first conductor, a first electrically insulating layer and a first metallic function layer arranged outside the first electrically insulating layer; a second power cable end section having a second conductor, a second electrically insulating layer and a second metallic function layer arranged outside the second electrically insulating layer; a cable joint connecting the first power cable end section and the second power cable end section, wherein the cable joint has a joint insulating layer for joining the first electrically insulating layer and the second electrically insulating layer, wherein the first conductor is soldered to the second conductor under use of a lead-free soldering material, and/or wherein the first metallic function layer is connected to the second metallic function layer under use of a lead-free soldering material, and wherein the lead-free soldering material comprises at least one of a group of components, the group consisting of indium, tin, aluminium, copper, silver, bismuth, zinc, antimony, lithium, and their alloy.

The lead-free soldering material may thus comprise at least one of a group of components, the group consisting of indium, an indium alloy, tin, a tin alloy, aluminium, an aluminium alloy, copper, a copper alloy, e.g. a braze alloy, silver, a silver alloy, bismuth, a bismuth alloy, zinc, a zinc alloy, antimony, and an antimony alloy.

The term "power cable assembly" refers to the jointed assembly of the first and the second power cable end. A power cable for intermediate to high voltage ratings often comprises an inner conductor and several layers provided radially outside the inner conductor, such as an electric insulation layer, a semiconductive shielding layer, an armoring layer and an outer sheathing. The first and second metallic function layer refer to the armoring layer, the sheathing layer, a water barrier or any other layer that is metallic. The metallic function layers provide additional protection and functionality, such as acting as a shield or a water barrier, which is particularly advantageous in subsea applications where the cable is exposed to harsh environmental conditions. The conductors of the first and second power cable end sections and/or the first and second metallic layer are joined by using a lead-free soldering material. The first power cable end section and the second power cable end section may preferably be similar or identical.

The joint insulating layer joins the first electrically insulating layer and the second electrically insulating layer and ensures maintaining the electrical integrity of the connection with consistent insulation properties. The joint insulating layer may be dimensioned to cope with high pressure in subsea applications.

Using a lead-free soldering material eliminates environmental and health risks associated with lead-based solders, making the power cable assembly more environmentally friendly. Additionally, lead-free soldering materials, such as those containing indium, tin, or their alloys, may offer comparable or superior mechanical and electrical properties, ensuring a robust and reliable connection between the conductors and/or the metallic function layers. The components of the composition of the lead-free soldering material are chosen for their excellent soldering properties, such as low melting points, good wettability, and strong mechanical bonds. The use of these materials ensures that the soldered joints are reliable and durable, even in the demanding conditions of subsea environments.

The proposed power cable assembly thus offers several advantages, including enhanced environmental safety due to the use of lead-free soldering materials, improved reliability and durability of the connections, and robust protection against harsh subsea conditions. These features collectively ensure that the power cable assembly is well-suited for environmentally sensitive applications, providing a reliable and long-lasting solution for subsea power transmission.

The term "soldering" refers to a process of joining two metal surfaces together through the use of a filler metal known as solder, which is melted and then cooled to create a durable joint. The metals to be joined are heated with a soldering iron or other heat source. Molten soldering material is applied and flows into the joint. As it cools, it solidifies to form a permanent connection. Soldering material having a melting point in a range of 90° to 450°C is used for "soft soldering" applications. Soldering material with a melting point above 450° is used for "hard soldering". The soldering process may include hand soldering, laser soldering, or other known soldering processes.

A joint metallic function layer may be soldered to the first metallic function layer and the second metallic function layer under use of a lead-free soldering material to connect the first metallic function layer and the second metallic function layer. This ensures that the joint between the metallic function layers is secure and maintains the protective functions of the layers, such as shielding or acting as a water barrier. The use of lead-free soldering material for this connection further enhances the environmental safety and reliability of the power cable assembly. The joint metallic function layer may include a wrapped foil, a longitudinally welded tube, and/or an extruded tube. The metallic function layer may have the same or a different outer diameter than the first and second metallic function layers. Preferably, a soldering connection bridges differences in diameter as harmoniously and evenly as possible to maintain optimum electric characteristics of the power cable assembly. A first end of the joint metallic function layer may be flush with the first metallic function layer. An opposite second end of the joint metallic function layer may be flush with the second metallic function layer. It thus bridges the distance between the first and second metallic function layers of the first and second cable end sections. However, at least one of the first end or the second end of the joint metallic function layer may overlap the respective first or second metallic function layer. By soldering with the lead-free soldering material, the first, second and joint metallic function layers are attached to each other.

The joint metallic function layer may be made from a variety of different materials, such as copper, a copper alloy, tin, a tin alloy, aluminium, an aluminium alloy, and others. The material of the joint metallic function layer does not necessarily match the material of the first and second metallic function layers of the cable end sections. However, a suitable lead-free soldering material shall be selected that is compatible with all the materials of the first, second and joint metallic function layers.

The first metallic function layer and/or the second metallic function layer may be a metal sheath. This provides additional mechanical protection to the power cable assembly, shielding the internal components from physical damage and environmental factors. The use of a metal sheath also enhances the overall durability and longevity of the power cable assembly, making it suitable for demanding applications such as subsea power transmission.

The first metallic function layer and/or the second metallic function layer may be at least a part of a water barrier for a subsea cable. This is particularly advantageous for subsea applications, where the power cable assembly is exposed to water and high pressures. The water barrier ensures that the internal components of the cable remain dry and protected, preventing electrical faults and enhancing the overall reliability of the power cable assembly.

The first and second metallic function layers may be arranged on top of a semiconducting layer, such as an outer semiconducting layer.

The lead-free soldering material may comprise an indium alloy, comprising indium in an amount ranging from 20% to 100% by weight of the alloy, tin in an amount ranging from 0% to 80% by weight of the alloy, and silver in an amount ranging from 0% to 10% by weight of the alloy. This specific composition of the indium alloy provides excellent soldering properties, such as low melting points, excellent thermal conductivity, and strong mechanical bonds, ensuring reliable and durable connections in the power cable assembly.

The compositions add to a total of 100 weight %. The compositions may all have unavoidable impurities. The amount of unavoidable impurities preferably does not exceed 1 weight %. Thus, the indium alloy may comprise a content of unavoidable impurities of 0 to 1% by weight based on the total weight of the indium alloy, and wherein the content of indium, tin, silver and unavoidable impurities sum up to 100 % by weight.

The lead-free soldering material may comprise a tin alloy, comprising tin in an amount ranging from 90% to 100% by weight of the alloy, silver in an amount ranging from 0% to 5% by weight of the alloy, antimony in an amount ranging from 0% to 5% by weight of the alloy, and copper in an amount ranging from 0% to 1% by weight of the alloy. This composition of the tin alloy offers excellent soldering properties, such as good wettability and strong mechanical bonds, ensuring reliable and durable connections in the power cable assembly. Antimony may increase the overall strength of the alloy while copper improves resistance to thermal cycle fatigue. The addition of silver also contributes to mechanical strength, particularly in lead-free formulations. In an embodiment, the lead-free soldering material may comprise a tin alloy comprising zinc in an amount ranging from 0% to 10% by weight of the alloy.

The tin alloy may comprise a content of unavoidable impurities of 0 to 1% by weight based on the total weight of the tin alloy, and wherein the content of tin, silver, antimony, copper, and unavoidable impurities sum up to 100 % by weight.

The lead-free soldering material may comprise a braze alloy, comprising copper in an amount ranging from 40% to 99.99% by weight of the alloy, silver in an amount ranging from 0% to 60% by weight of the alloy, phosphorous in an amount ranging from 0% to 5% by weight of the alloy, and zinc in an amount ranging from 0% to 60% by weight of the alloy. This composition of the braze alloy provides excellent soldering properties, such as high strength and good corrosion resistance, ensuring reliable and durable connections in the power cable assembly.

The lead-free soldering material may comprise an aluminium alloy, comprising zinc in an amount ranging from 0% to 99% by weight of the alloy, copper in an amount ranging from 0% to 50% by weight of the alloy, and silicon in an amount ranging from 0% to 50% by weight of the alloy. For example, the aluminium alloy may be based on AA7075 and may comprise zinc in an amount ranging from 3% to 8% by weight of the alloy, magnesium in an amount ranging from 1% to 4% by weight of the alloy, copper in an amount ranging from 0% to 3% by weight of the alloy. As another example, the aluminium alloy may be based on AA2024 and may comprise copper in an amount ranging from 3% to 6% by weight of the alloy, manganese in an amount ranging from 0% to 1% by weight of the alloy, and magnesium in an amount ranging from 0% to 3% by weight of the alloy. As a further example, the aluminium alloy may be based on A380 or A413 and may comprise silicon in an amount ranging from 6% to 20% by weight of the alloy, zinc in an amount ranging from 0% to 5% by weight of the alloy, and copper in an amount ranging from 0% to 10% by weight of the alloy.

In an embodiment, the lead-free soldering material may comprise bismuth or a bismuth alloy. The bismuth alloy may comprise tin in an amount ranging from 40% to 45% by weight of the alloy.

In an embodiment, the lead-free soldering material may comprise lithium.

In an embodiment, the lead-free soldering material may comprise zinc.

The power cable assembly according to the above may comprise at least one of following: three electrical conductors, two electrical conductors, a filler, a tube, and a glass fibre.

The power cable end sections may be a part of a high voltage power cable, preferably a high voltage power cable suitable for operating between 50 kV and 1.100 kV, more preferred between 100 kV and 1.000 kV, even more preferred between 123 kV and 750 kV. For example, the high voltage power cable may operate at 145 kV or 245 kV maximum voltage.

It is further proposed a method for joining a first power cable end section and a second power cable end section of a power cable assembly by preparing a cable joint, wherein the first power cable end section has a first conductor, a first electrically insulating layer, and a first metallic function layer arranged outside the first electrically insulating layer; wherein the second power cable end section has a second conductor, a second electrically insulating layer, and a second metallic function layer arranged outside the second electrically insulating layer; wherein the method comprises following steps for preparing the cable joint: soldering the first conductor to the second conductor under use of a lead-free soldering material, and/or soldering a joint metallic function layer to the first metallic function layer and second metallic function layer under use of a lead-free soldering material or attaching a joint metallic function layer comprising a lead-free soldering material to the first metallic function layer and the second metallic function layer, and providing a joint insulating layer for joining the first electrically insulating layer and the second electrically insulating layer, wherein the lead-free soldering material comprises at least one of a group of components, the group consisting of indium, an indium alloy, tin, a tin alloy, and a braze alloy. The proposed method for joining power cable end sections offers several advantages, including enhanced environmental safety due to the use of lead-free soldering materials, improved reliability and durability of the connections, and robust protection against harsh subsea conditions. These features collectively ensure that the power cable assembly is well-suited for environmentally sensitive applications, providing a reliable and long-lasting solution for subsea power transmission.

The first metallic function layer and/or the second metallic function layer may be a metal sheath.

The first metallic function layer and/or the second metallic function layer may be at least a part of a water barrier for a subsea cable.

The lead-free soldering material may comprise an indium alloy, comprising indium in an amount ranging from 20% to 100% by weight of the alloy, tin in an amount ranging from 0% to 80% by weight of the alloy, and silver in an amount ranging from 0% to 10% by weight of the alloy.

The lead-free soldering material may comprise a tin alloy, comprising tin in an amount ranging from 90% to 100% by weight of the alloy, silver in an amount ranging from 0% to 5% by weight of the alloy, antimony in an amount ranging from 0% to 5% by weight of the alloy, and copper in an amount ranging from 0% to 1% by weight of the alloy.

The lead-free soldering material may comprise a braze alloy, comprising copper in an amount ranging from 40% to 99.99% by weight of the alloy, silver in an amount ranging from 0% to 60% by weight of the alloy, phosphorous in an amount ranging from 0% to 5% by weight of the alloy, and zinc in an amount ranging from 0% to 60% by weight of the alloy.

It is further proposed the use of a lead-free soldering material comprising at least one of a group of components, the group consisting of indium, an indium alloy, tin, a tin alloy, and a braze alloy, for soldering a joint metallic function layer to a first metallic function layer and second metallic function layer of a power cable assembly. The resulting joint between the metallic function layers is secure and maintains the protective functions of the layers, such as shielding or acting as a water barrier, and further enhances the environmental safety of the power cable assembly.

### Short description of the drawings

In the following description this invention will be further explained by way of exemplary embodiments shown in the drawings:
Fig. 1 shows a power cable assembly in a sectional view.
Fig. 2 shows a schematic overview of the method for joining cable end sections.

### Detailed description of the invention

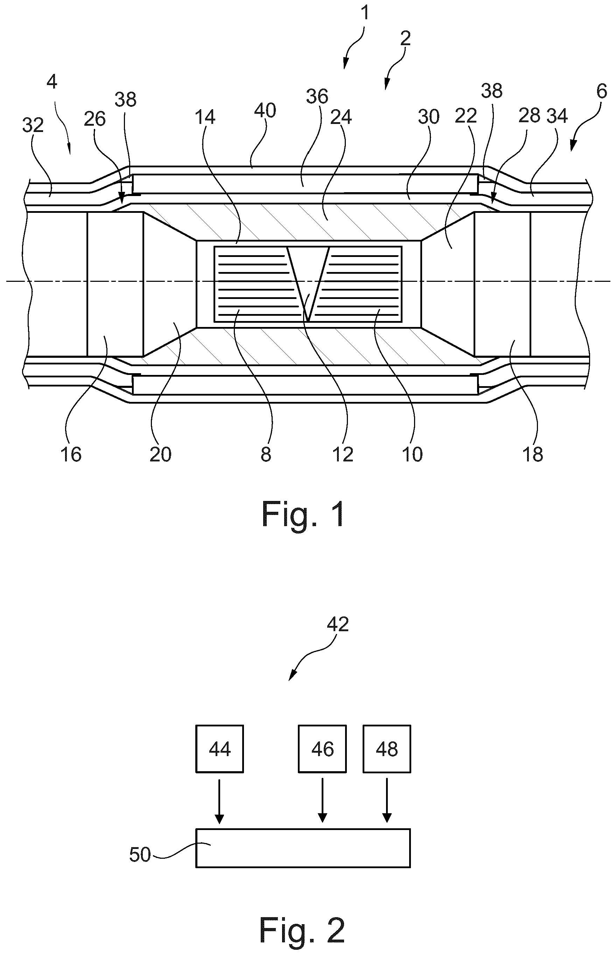

Fig. 1 shows a power cable assembly 1 having a joint 2 connecting a first power cable end section 4 and a second power cable end section 6. Both power cable end sections belong to high voltage cables, such as HVAC or HVDC cables. Initially, a first conductor 8 and a second conductor 10 axially protrude from the power cable end sections 4 and 6 before joining the power cable end sections 4 and 6.

As illustrated in the center of the illustration, the first conductor 8 and the second conductor 10 are joined to form a metal joint 12. The joining process may be chosen depending on the material of the conductors 8 and 10, which may, for example, comprise copper or aluminium. The joining process may include welding or soldering. If soldering is chosen, a lead-free soldering material may be used as explained in the summary above. The lead-free soldering material comprises at least one of a group of components, the group consisting of indium, an indium alloy, tin, a tin alloy, and a braze alloy.

The conductors 8 and 10 and the metal joint 12 are exemplarily surrounded by a semiconductor layer 14, which may be based on carbon black dispersed within a polymeric matrix. This semiconductor layer 14 may be referred to as inner semiconducting layer 14, as it may be the innermost semiconducting layer of the completed joint 2. The inner semiconducting layer 14 may be installed by molding, wherein the outer surface of the inner semiconducting layer 14 may be finished afterwards.

The cable ends 4 and 6 each comprise an insulation 16 and 18, which are exemplarily formed to cones 20 and 22 to mitigate electric stress within the joint 2. The shape of the cones 20 and 22 may be prepared prior to joining the conductors 8 and 10 or afterwards, depending on available tools. Exemplarily, the cones 20 and 22 have a frustoconical shape with annular end faces, which may be parallel to each other. The cones 20 and 22 may be prepared with exact delimitations, i.e., precisely finished annular end faces and an exact shape and course of the lateral surface that extends between the annular end faces.

The inner semiconducting layer 14 and both cones 20 and 22 are surrounded by a joint insulation 24. The joint insulation 24 may be molded onto the arrangement of insulations 16 and 18, cones 20 and 22 as well as the inner semiconducting layer 14.

Exemplarily, the joint insulation 24 axially extends beyond the respective cones 20 and 22 in a direction away from the metal joint 12. The joint insulation 24 is chamfered at axial ends 26 and 28 to form frustoconical end shapes that taper off in a direction away from the metal joint 12.

The insulations 16, 18 and 24 are surrounded by an outer semiconducting layer 30, which may have similar properties as the inner semiconducting layer 14. Thus, preparing the outer semiconducting layer 30 may comprise a molding process. Respective semiconducting layers of the cable end sections 4 and 6 are completed by this process, such that the illustration of Fig. 1 only shows a single reference numeral for the outer semiconducting layer 30 as a continuous, uninterrupted layer 30 extending into the first and second cable end sections 4 and 6.

The first power cable end section 4 has a metallic sheath 32 as a first metallic function layer surrounding the outer semiconducting layer 30 and the second power cable end section 6 has a metallic sheath 34 as a second metallic function layer surrounding the outer semiconducting layer 30. The metallic sheaths 32 and 34 may act as a water barrier for the power cable assembly 1. To close the metallic sheaths 32 and 34, a metal tube 36 as a joint metallic function layer is connected to both metallic sheaths 32 and 34 through soldering connections 38. The metal tube 36 may be provided in form of an extruded part or in form of a longitudinally welded sheet. These may be realized by using a lead-free soldering material. The lead-free soldering material comprises at least one of a group of components, the group consisting of indium, an indium alloy, tin, a tin alloy, and a braze alloy.

In the shown illustration of Fig. 1, the joint metallic function layer 36, i.e. the tube, has an outer diameter that exceeds the outer diameters of the first and second metallic sheaths 32 and 34. The soldering connections 38 are tapering off away from the tube 36 to make a harmonic diameter transition.

As an outer layer, a heat-shrinking sleeve 40 is arranged on the cable joint 2 to act as an additional protection.

The illustration of Fig. 1 is simplified, and additional and/or alternative layers may be used, such as a PE sheath, a metallic screen and an outer PVC protection sheath. It is to be understood that other setups of the joint 2 may be possible and are not ruled out herein.

Fig. 2 shows a schematic, block-oriented diagram of a method 42 for joining the first power cable end section 4 and the second power cable end section 6 of the power cable assembly 1 by preparing the cable joint 2 according to the above. The method 42 comprises the steps of soldering 44 the first conductor 8 to the second conductor 10 under use of a lead-free soldering material, and/or soldering 46 a joint metallic function layer to the first metallic function layer and second metallic function layer under use of a lead-free soldering material or attaching 48 a joint metallic function layer comprising a lead-free soldering material to the first metallic function layer and the second metallic function layer, and providing 50 a joint insulating layer for joining the first electrically insulating layer 16 and the second electrically insulating layer 18, wherein the lead-free soldering material comprises at least one of a group of components, the group consisting of indium, an indium alloy, tin, a tin alloy, and a braze alloy.

### Reference numerals

- 1: power cable assembly
- 2: joint
- 4: first power cable end section
- 6: second power cable end section
- 8: first conductor
- 10: second conductor
- 12: metal joint
- 14: semiconductor layer
- 16: insulation
- 18: insulation
- 20: cone
- 22: cone
- 24: joint insulation
- 26: axial end
- 28: axial end
- 30: outer semiconducting layer
- 32: first metallic function layer / metallic sheath
- 34: second metallic function layer / metallic sheath
- 36: joint metallic function layer / tube
- 38: soldering connection
- 40: heat shrinking sleeve
- 42: method
- 44: soldering first and second conductor
- 46: soldering joint metallic function layer
- 48: attaching joint metallic function layer
- 50: providing joint insulating layer

## Claims

1. A power cable assembly (1), comprising:
- a first power cable end section (4) having a first conductor (8), a first electrically insulating layer (16) and a first metallic function layer (32) arranged outside the first electrically insulating layer (16);
- a second power cable end section (6) having a second conductor (10), a second electrically insulating layer (18) and a second metallic function layer (34) arranged outside the second electrically insulating layer (18);
- a cable joint (2) connecting the first power cable end section (4) and the second power cable end section (6),
wherein the cable joint (2) has a joint insulating layer (24) for joining the first electrically insulating layer (16) and the second electrically insulating layer (18),
wherein the first conductor (8) is soldered to the second conductor (10) under use of a lead-free soldering material, and/or
wherein the first metallic function layer (32) is connected to the second metallic function layer (34) under use of a lead-free soldering material, and
wherein the lead free soldering material is selected from the group consisting of:
- an indium alloy comprising 20-100 wt% indium, 0-80 wt% tin, and 0-10 wt% silver;
- a tin alloy comprising 90-100 wt% tin, 0-5 wt% silver, 0-5 wt% antimony, and 0-1 wt% copper; and
- a braze alloy comprising 40-99.99 wt% copper, 0-60 wt% silver, 0-5 wt% phosphorous, and 0-60 wt% zinc;
wherein the joint metallic function layer (36) is a tube having an outer diameter exceeding that of the first and second metallic function layers (32, 34), and the soldering connections (38) taper off to harmonize the diameter transition; and
wherein the first and second metallic function layers (32, 34) act as a water barrier.

2. The power cable assembly (1) according to claim 1,
wherein a joint metallic function layer (36) is soldered to the first metallic function layer (32) and the second metallic function layer (34) under use of a lead-free soldering material to connect the first metallic function layer (32) and the second metallic function layer (34).

3. The power cable assembly (1) according to claim 1 or 2,
wherein the first metallic function layer (32) and/or the second metallic function layer (34) is a metal sheath.

4. The power cable assembly (1) according to any of the preceding claims,
wherein the first metallic function layer (32) and/or the second metallic function layer (34) is at least a part of a water barrier for a subsea cable.

5. The power cable assembly (1) according to any of the preceding claims,
wherein the lead-free soldering material comprises an aluminium alloy, comprising:
zinc in an amount ranging from 0% to 99% by weight of the alloy,
copper in an amount ranging from 0% to 50% by weight of the alloy, and
silicon in an amount ranging from 0% to 50% by weight of the alloy.

6. A method (42) for joining a first power cable end section (4) and a second power cable end section (6) of a power cable assembly (1) by preparing a cable joint (2),
wherein the first power cable end section (4) has a first conductor (8), a first electrically insulating layer (16) and a first metallic function layer (32) arranged outside the first electrically insulating layer (16);
wherein the second power cable end section (6) has a second conductor (10), a second electrically insulating layer (18) and a second metallic function layer (34) arranged outside the second electrically insulating layer (18);
wherein the method comprises following steps for preparing the cable joint (2):
- soldering (44) the first conductor (8) to the second conductor (10) under use of a lead-free soldering material, and/or
- soldering (46) a joint metallic function layer to the first metallic function layer (32) and second metallic function layer (34) under use of a lead-free soldering material
- providing (50) a joint insulating layer for joining the first electrically insulating layer (16) and the second electrically insulating layer (18),
wherein the lead free soldering material is selected from the group consisting of:
- an indium alloy comprising 20-100 wt% indium, 0-80 wt% tin, and 0-10 wt% silver;
- a tin alloy comprising 90-100 wt% tin, 0-5 wt% silver, 0-5 wt% antimony, and 0-1 wt% copper; and
- a braze alloy comprising 40-99.99 wt% copper, 0-60 wt% silver, 0-5 wt% phosphorous, and 0-60 wt% zinc;
wherein the joint metallic function layer (36) is a tube having an outer diameter exceeding that of the first and second metallic function layers (32, 34), and the soldering connections (38) taper off to harmonize the diameter transition; and
wherein the first and second metallic function layers (32, 34) act as a water barrier.

7. The method (42) according to claim 6,
wherein the first metallic function layer (32) and/or the second metallic function layer (34) is a metal sheath.

8. The method (42) according to claim 6 or 7,
wherein the first metallic function layer (32) and/or the second metallic function layer (34) is at least a part of a water barrier for a subsea cable.

9. The use of a lead-free soldering material comprising at least one of a group of components, the group consisting of indium, an indium alloy, tin, a tin alloy, aluminium, an aluminium alloy, and a braze alloy, for soldering a joint metallic function layer (46) to a first metallic function layer (32) and second metallic function layer (34) of a power cable assembly (1) according to any of claims 1 to 5.
